(19) Europäisches Patentamt
European Patent Office
Office européen des brevets

(11) Numéro de publication: **0 061 949**
**B1**

# (12) FASCICULE DE BREVET EUROPEEN

(45) Date de publication du fascicule du brevet: **25.09.85**

(51) Int. Cl.⁴: **C 12 H 1/10,** A 23 L 2/30, C 12 G 1/02

(21) Numéro de dépôt: **82400412.1**

(22) Date de dépôt: **09.03.82**

## (54) Produit et procédé permettant la désacidification dans des liquides divers, plus particulièrement l'élimination de l'acide malique des moûts et vins.

(30) Priorité: **11.03.81 FR 8104828**

(43) Date de publication de la demande: **06.10.82 Bulletin 82/40**

(45) Mention de la délivrance du brevet: **25.09.85 Bulletin 85/39**

(84) Etats contractants désignés: **AT BE CH DE GB IT LI LU NL**

(56) Documents cités:
**DE - B - 1 282 580**
**FR - A - 2 109 317**
**FR - A - 2 364 270**
**GB - A - 1 530 849**
**US - A - 4 112 128**

**AM. J. ENOL. VITIC, vol. 29, no. 3, 1978 US J.T. STEELE et al.: "Deacidification of musts from the western United States by the calcium double-salt precipitation process", pages 153-160**
**MICROBIOLOGY ABSTRACTS, section A, Industrial andapplied microbiology, vol. 10, no. 8, août 1975 résumé 10A5417 C. MARESCALCHI: "Deacidification and stabilisation of musts in Germany", page 14**
**CHEMICAL ABSTARCTS, vol. 72, no. 17, 27 avril 1970, page 248, résumé 88899v Columbus, Ohio, US A.**

(73) Titulaire: **SOFRALAB SOCIETE FRANCAISE DES LABORATOIRES D'OENOLOGIE, 180 rue de Verdun, F-94500 Champigny-sur-Marne (FR)**

(72) Inventeur: **Geolier, épouse Vialatte C. S. E. L., 183, rue de Verdun, F-94500 Champigny-sur-Marne Val de Marne (FR)**

(74) Mandataire: **Madeuf, Claude Alexandre Jean et al, CABINET MADEUF 3, avenue Bugeaud, F-75116 Paris (FR)**

(56) Documents cités: (suite)
**MEIXNER: "Precipitation of calcium tartrate from wine" AM. J. ENOL. VITIC, vol. 30, no. 3, 1979 US J.T. STEELE et al.: "Deacidification of high acid California wines by calcium double-salt precipitation", pages 227-231**

**EP 0 061 949 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention a pour objet un procédé de désacidification de liquides alimentaires, en particulier des vins, afin d'en éliminer une partie de l'acide malique au-delà des teneurs stoechiométriquement équivalentes en acide tartrique. Plus spécialement, l'invention se rapporte à un procédé pour l'élimination de l'acide malique quelles que soient les teneurs en acide tartrique du produit.

L'acidité des moûts, des vins et d'une façon générale de tous les produits provenant du raisin est due à la présence d'acide tartrique dans le jus de raisin mais également d'acide malique.

Pendant la période de maturation des raisins, il y a augmentation des teneurs en sucre et diminution des teneurs en acide, essentiellement diminution des teneurs en acide malique, mais lorsque la maturation est insuffisante, par suite des conditions climatiques, le vin et trop acide et cette acidité excédentaire est principalement due à l'acide malique. C'est donc cet acide qu'il serait souhaitable d'éliminer tout au moins en partie. En effet, certaines années, il est possible de voir des vins ayant des teneurs de 8 à 10 g/l d'acide malique et seulement 2 g/l d'acide tartrique.

La désacidification des moûts et des vins peut être obtenue par addition d'ions basiques: ions potassium sous forme de bicarbonate de potassium, ions calcium sous forme de carbonate de calcium. Théoriquement, 1 g/l de bicarbonate de potassium fait baisser l'acidité de moût ou du vin de 0,49 g/l exprimée en acide sulfurique avec apport de potassium de 390 mg/l. Cette désacidification peut être suivie de précipitation de bitartrate de potassium, sel acide peu soluble de l'acide tartrique avec baisse à nouveau de l'acidité et donc élimination d'une partie de l'acide tartrique. Un gramme par litre de carbonate de calcium fait baisser l'acidité du moût ou du vin de 0,98 mg au litre exprimé en acide sulfurique avec apport de calcium de 400 mg/l, et précipitation de tartrate de calcium; cette dernière précipitation n'entraîne pas de baisse d'acidité, le tartrate de calcium étant un sel neutre; elle élimine une partie du calcium ajouté avec une partie de l'acide tartrique du vin. Dans ces désacidifications, on ne touche pas à l'acide malique dont les sels de potassium ou de calcium sont très solubles, par contre on peut éliminer des quantités trop importantes d'acide tartrique et détruire l'équilibre du vin.

La désacidification double permet de faire précipiter des quantités moléculairement équivalentes d'acide tartrique et d'acide malique sous forme d'un sel double de l'acide L + tartrique, de l'acide L − malique et du calcium, le tartromalate de calcium très peu soluble à des pH supérieurs à 4,5. Dans ce cas, on désacidifie complètement une partie du vin ou du moût en l'amenant à un pH supérieur à 4,5 par du carbonate de calcium, le sel double précipite, on l'élimine, l'acidité résiduelle du vin est de l'ordre de 1,5 g/l exprimé en acide sulfurique. La partie du vin désacidifiée est mélangée au vin acide initial restant dans des proportions correspondant à la baisse l'acidité souhaitée sur le mélange final.

Ce procédé permet d'éliminer de l'acide malique mais seulement si le vin contient également des teneurs suffisantes en acide tartrique. 2 g carbonate de calcium pourront faire précipiter 1,5 g d'acide tartrique et 1,34 g d'acide malique et abaisser l'acidité de 1,96 g exprimée en acide sulfurique. Si les teneurs en acide malique sont trop élevées par rapport à celles en acide tartrique (teneur en acide malique supérieure à 1,34/1,5 d'acide tartrique), une partie du carbonate de calcium ajouté pour amener la partie désacidifiée à pH 4,5 se trouve sous forme de malate de calcium soluble, au moment du mélange final le calcium ainsi excédentaire reprécipite avec l'acide tartrique du vin acide comme dans une désacidification classique au carbonate de calcium avec perte à nouveau d'acide tartrique.

Un procédé de ce genre est décrit dans le brevet GB-A-1 530 849 qui révèle, pour la désacidification du vin, l'emploi simultané de $CaCo_3$ et de tartrate de Ca mais le tartrate de calcium dans la technique antérieure ne joue pas le même rôle.

La présente invention remédie aux inconvénients ci-dessus mentionnés.

Conformément à l'invention, le procédé pour la désacidification de divers jus naturels contenant de l'acide malique tels que le moût de raisin ou le vin est caractérisé en ce qu'on ajoute après détermination de l'acidité totale et éventuellement des teneurs en acide tartrique et malique du liquide à désacidifier un produit désacidifiant à base de carbonate de calcium et de tartrate de calcium en quantité suffisante pour représenter un apport d'ions tartriques permettant la précipitation d'acide malique sous forme de tartromalate de calcium, en maintenant dans le milieu une valeur de pH supérieure à 4,5.

Suivant une autre caractéristique de l'invention, les teneurs en tartrate de calcium (exprimées en acide tartrique) dans le produit désacidifiant peuvent atteindre en poids 40% du poids total du produit désacidifiant.

Diverses autres caractéristiques de l'invention ressortent d'ailleurs de la description détaillée qui suit.

Dans le procédé de l'invention, le jus acide (moût, vin ou tout autre jus d'origine naturelle contenant de l'acide malique) est amené à un pH supérieur à 4,5 par un produit contenant du carbonate de calcium et du tartrate de calcium. Le tartrate de calcium peut être introduit dans le jus à désacidifier indépendamment du carbonate de calcium au cours de l'opération de désacidification. Il s'agit essentiellement de désacidifier en touchant le moins possible à l'acide tartrique du produit, en éliminant de l'acide malique et en ne risquant pas d'enrichir le produit en acide tartrique exogène. L'opération conforme à l'invention est représentée par le schéma ci-dessous où une molécule double de tartrate de calcium plus deux molécules de carbonate de calcium plus deux molécules d'acide malique peuvent donner

deux molécules de sels doubles de tartromalate de calcium avec départ de deux molécules de gaz carbonique.

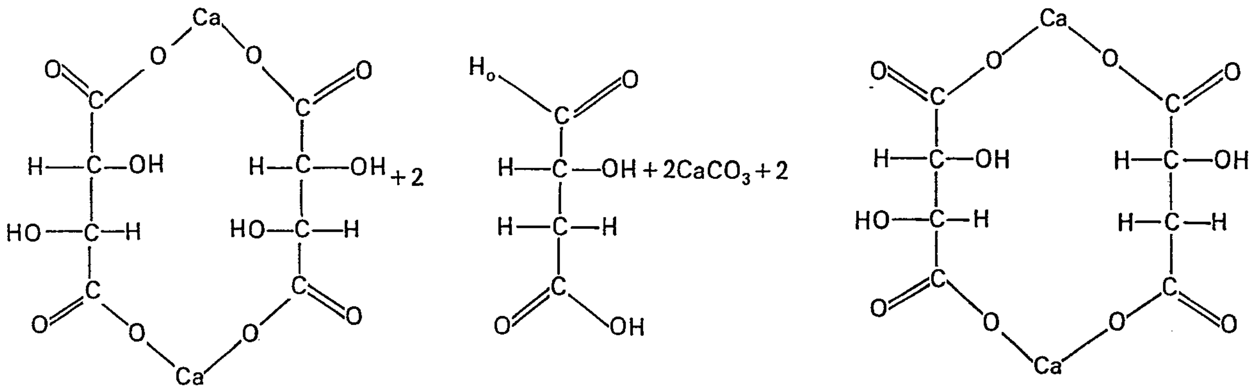


Il n'est pas alors nécessaire d'avoir dans le jus à désacidifier des quantités équivalentes d'acide tartrique et d'acide malique. Le produit désacidifiant peut contenir, outre du carbonate de calcium et du tartrate de calcium, un peu de bicarbonate de potassium pour faciliter l'élévation du pH dans les cas où le jus à désacidifier présente un pH très bas.

Les proportions des différents composants du produit désacidifiant peuvent varier suivant la composition du produit à désacidifier mais, en général, elles sont les suivantes:

| | |
|---|---|
| - calcium | 22 à 40% en poids du produit |
| - potassium | 0 à 5% en poids du produit |
| - acide tartrique | 5 à 40% en poids du produit |
| - acide malique | 0 à 3% en poids du produit |

Le pouvoir de désacidification du produit désacidifiant est compris en général entre 28% et 100% exprimé en $H_2SO_4$ (acide sulfurique).

Exemple de désacidification d'un vin avec le produit désacidifiant ayant un pouvoir désacidifiant de 32%.

Soit un vin dont les teneurs analytiques sont les suivantes:

| | |
|---|---|
| - pH | 3,05 |
| - Acidité totale en g/l exprimée en $H_2SO_4$ | 6,35 |
| - Acide tartrique en g/l | 3 |
| - Acide malique en g/l | 6,7 |
| - Calcium en g/l | 0,091 |

On souhaite abaisser l'acidité de ce vin de 2 g/l, soit la ramener à 4,35 g/l.

Il faudra utiliser 2/0,32 = 6,25 g/l du produit désacidifiant.

Après désacidification à pH 4,5, l'acidité totale du vin peut être inférieure à 1 g/l; on mettra donc en œuvre un pourcentage de vin x tel que:

$$x(1) + (100-x)6{,}35 = 100 \times 4{,}35$$

vin désacidifié à pH 4,5 vin acide mélange final, soit 37,4% de la totalité du vin acide.

Pour réaliser la désacidification de 100 l de vin, on mettra 650 g du produit désacidifiant dans une cuve, on versera dessus d'abord 1 ou 2 litres de vin acide pour obtenir par mélange une bouillie à laquelle on ajoutera petit à petit le reste des 37,4 l de vin acide en agitant toujours. On poursuivra l'agitation jusqu'à obtenir une stabilisation du pH à environ 4,5. Cette opération peut demander 12 à 24 heures et même davantage suivant les conditions d'agitation.

On laissera décanter le vin désacidifié à pH 4,5, puis les cristaux de tartromalate de calcium formés dans l'opération de désacidification seront éliminés par filtration, centrifugation ou tout autre procédé mécanique de séparation.

L'analyse du vin désacidifié est alors environ la suivante:

| | |
|---|---|
| - pH | 4,5 |
| - Acidité totale g/l exprimée en $H_2SO_4$ | 1 |
| - Acide tartrique g/l | 0 |
| - Acide malique g/l | 1 |
| - Calcium g/l | 0,110 |

Il y a donc eu élimination sous forme de sel double:

| | |
|---|---|
| - Acide tartrique: | 112 g |
| - Acide malique: | 213 g |

Le vin désacidifié à pH 4,5 est mélangé aux 62,6 l de vin acide pour donner 100 l de vin d'une acidité totale de 4,35 g/l.

L'analyse du vin final est la suivante:

| | |
|---|---|
| - pH | 3,2 |
| - Acidité totale exprimée en $H_2SO_4$ g/l | 4,35 |
| - Acide tartrique g/l | 1,9 |
| - Acide malique g/l | 4,55 |
| - Calcium g/l | 0,098 |

Le procédé de l'invention peut donc permettre d'abaisser dans des proportions importantes l'acidité du vin en éliminant davantage d'acide malique que d'acide tartrique.

D'une façon pratique, on peut mélanger le produit désacidifiant à une petite partie du produit à neutraliser (3 à 8%) pour former une bouillie dont

le pH est supérieur à 6. Cette bouillie est placée dans la cuve de désacidification possédant si possible un agitateur et est mise en circulation par un circuit court et de fort débit permettant l'entraînement des cristaux. Un raccord permet d'injecter le produit acide dans le produit en cours de désacidification avec un débit très faible. Une vanne asservie à un pH mètre permet de régler le débit de façon à ne pas risquer de descendre à un pH inférieur à 4,5 auquel les sels de tartromalate de calcium sont solubles. Le liquide à désacidifier, par exemple le vin, ne risque pas d'être oxydé puisqu'il y a dégagement de gaz carbonique dans la cuve de désacidification.

**Revendications**

1. Procédé pour la désacidification de divers jus naturels contenant de l'acide malique, tels que le moût de raisin ou le vin, caractérisé en ce qu'on ajoute après détermination de l'acidité totale et éventuellement des teneurs en acide tartrique et malique du liquide à désacidifier un produit désacidifiant à base de carbonate de calcium et de tartrate de calcium en quantité suffisante pour représenter un apport d'ions tartriques, permettant la précipitation d'acide malique sous forme de tartromalate de calcium, en maintenant dans le milieu une valeur de pH supérieure à 4,5.

2. Procédé suivant la revendication 1 dans lequel les teneurs en tartrate de calcium (exprimées en acide tartrique) dans le produit désacidifiant peuvent atteindre en poids 40% du poids total du produit désacidifiant.

3. Procédé suivant la revendication 1, caractérisé en ce qu'on ajoute après détermination de l'acidité totale et éventuellement des teneurs en acide tartrique et malique du liquide à désacidifier une quantité appropriée en poids du produit désacidifiant que l'on mélange à quelques litres du liquide à désacidifier avec agitation; puis on ajoute la partie aliquote prévue dudit liquide, toujours en agitant et en maintenant une valeur de pH supérieure à 4,5 en tout point du milieu.

4. Procédé suivant la revendication 3, dans lequel les cristaux en formation sont maintenus en suspension dans le liquide par agitation ou circulation du liquide.

5. Procédé suivant la revendication 3, caractérisé en ce que le liquide ajouté l'est par l'intermédiaire d'une vanne asservie à un pH mètre permettant la maintenance du pH du milieu réactionnel à une valeur déterminée supérieure à 4,5.

6. Procédé suivant la revendication 3, caractérisé en ce que l'agitation du mélange produit-liquide est maintenue pendant un temps supérieur au temps nécessaire à la réalisation du procédé défini dans la revendication précédente en permettant ainsi l'abaissement définitif du taux de calcium, le temps d'agitation pouvant aller jusqu'à 24 heures suivant le déséquilibre tartromalique du jus à désacidifier et les volumes mis en œuvre.

7. Procédé suivant la revendication 3, caractérisé en ce que le retrait des cristaux de tartromalate de calcium est effectué par filtration, centrifugation, sédimentation.

8. Procédé suivant la revendication 7, dans lequel la partie aliquote du jus amené à pH 4,5 est mélangée à la partie non désacidifiée après le retrait des cristaux de tartromalate.

**Patentansprüche**

1. Verfahren zum Entsäuren von verschiedenen, Apfelsäure enthaltenden, natürlichen Säften wie Traubenmost oder Wein, dadurch gekennzeichnet, dass man nach der Bestimmung der Gesamtacidität der zu entsäurenden Flüssigkeit und ggf. ihrer Gehalte an Weinsäure und Apfelsäure ein entsäurendes, hauptsächlich aus Calciumcarbonat und Calciumtartrat bestehendes Produkt zugibt, und zwar in einer Gewichtsmenge, die ausreicht, um eine Zugabe von Tartrat-Ionen darzustellen, was die Abtrennung von Apfelsäure als Calciumtartromalat erlaubt, indem ein pH-Wert des Reaktionsmilieus von über 4,5 aufrechterhalten wird.

2. Verfahren nach Anspruch 1, dadurch gekennzeichnet, dass die Gehalte an Calciumtartrat (als Weinsäure angegeben) in dem entsäurenden Produkt einen Gewichtsprozentsatz von 40% des Gesamtgewichts des entsäurenden Produktes erreichen können.

3. Verfahren nach Anspruch 1, dadurch gekennzeichnet, dass man nach der Bestimmung der Gesamtacidität der zu entsäurenden Flüssigkeit und ggf. ihrer Gehalte an Weinsäure und Apfelsäure eine geeignete Gewichtsmenge des entsäurenden Produkts zugibt, das man mit einigen Litern der zu entsäurenden Flüssigkeit unter Rühren mischt, und dann, stets unter Rühren und unter Aufrechterhaltung eines pH-Wertes von über 4,5 an jedem Punkt des Milieus, eine entsprechende Menge der zu entsäurenden Flüssigkeit zugibt.

4. Verfahren nach Anspruch 3, dadurch gekennzeichnet, dass die Kristalle bei ihrer Bildung durch Rühren und Zirkulierenlassen der Flüssigkeit in der Flüssigkeit in Suspension gehalten werden.

5. Verfahren nach Anspruch 3, dadurch gekennzeichnet, dass die zugegebene Flüssigkeit durch einen Schieber strömt, der in Abhängigkeit des pH-Wertes gesteuert wird, was die Aufrechterhaltung eines vorgegebenen pH-Wertes des Reaktionsmilieus von mehr als 4,5 erlaubt.

6. Verfahren nach Anspruch 3, dadurch gekennzeichnet, dass das Rühren der Produkt-Flüssigkeit-Mischung während einer Zeitspanne aufrechterhalten wird, die länger als diejenige ist, die für die Ausführung des im vorigen Anspruch beschriebenen Verfahrens notwendig ist, was die endgültige Herabsetzung des Gehalts an Calcium erlaubt, wobei die Rührzeitspanne je nach dem Missverhältnis zwischen Weinsäure und Apfelsäure im zu entsäurenden Saft und den benutzten Gewichtsmengen bis zu 24 Stunden variieren kann.

7. Verfahren nach Anspruch 3, dadurch gekennzeichnet, dass die Abtrennung der Calciumtartromalatkristalle durch Filtrieren, Zentrifugieren oder Niederschlag erfolgt.

8. Verfahren nach Anspruch 7, dadurch gekennzeichnet, dass die Teilmenge des Saftes, der einen pH-Wert von 4,5 aufweist, nach der Abtrennung der Tartromalatkristalle mit der Menge des nicht entsäuerten Saftes vermischt wird.

## Claims

1. Method for deacidifying various natural juices containing malic acid, such as grape must or wine, characterized in that there is added, after determining the total acidity and possibly the amounts in tartaric and malic acids of the liquid to be deacidified, a calcium carbonate and calcium tartrate based deacidifying product in a sufficient quantitiy to represent an addition of tartaric ions enabling the precipitation of malic acid as calcium tartromalate, while maintaining in the medium a pH value above 4.5.

2. Method according to claim 1, wherein the amounts in calcium tartrate (expressed in tartaric acid) in the deacidifying product may reach by weight 40% of the total weight of the deacidifying product.

3. Method according to claim 1, characterized in that there is added, after determining the total acidity and possibly the amounts in tartaric and malic acids of the liquid to be deacidified, a suitable quantity by weight of the deacidifying product which is mixed to some litres of the liquid to be deacidified while stirring; there is then added the provided aliquot part of said liquid, still while stirring and while maintaining a pH value above 4.5 in all points of the medium.

4. Method according to claim 3, wherein the forming crystals are maintained in suspension in the liquid by stirring or circulating the liquid.

5. Method according to claim 3, characterized in that the added liquid is added through a pH meter-controlled valve enabling to maintain the pH of the reaction medium at a predetermined value above 4.5.

6. Method according to claim 3, characterized in that stirring of the product-liquid mixture is maintained during a time longer than the time which is necessary for realizing the method defined in the preceding claim while enabling thus the final decrease of the calcium rate, the stirring time being able to last up to 24 hours according to the tartromalic unbalance of the juice to be deacidified and the volumes which are used.

7. Method according to claim 3, characterized in that withdrawal of the calcium tartromalate crystals is made by filtration, centrifugation, sedimentation.

8. Method according to claim 7, wherein the aliquot part of the juice brought to pH 4.5 is mixed to the un-deacidified part after withdrawal of the tartromalate crystals.